# EUROPÄISCHE PATENTSCHRIFT

(11) **EP 2 422 154 B1**
(45) Veröffentlichungstag und Bekanntmachung des Hinweises auf die Patenterteilung: **09.01.2013**
(21) Anmeldenummer: 10709527.5
(22) Anmeldetag: 18.03.2010
(51) Int. Cl.: F27B 7/20, F27B 7/32, F27D 3/00, F27D 13/00, C04B 7/43

(54) **ANLAGE ZUR WÄRMEBEHANDLUNG VON STÜCKIGEM FESTSTOFF**
SYSTEM FOR HEAT TREATING LUMPY SOLIDS
INSTALLATION DESTINÉE AU TRAITEMENT THERMIQUE DE MATIÈRE SOLIDE EN MORCEAUX

(30) Priorität: 20.04.2009 DE 102009018099
(43) Veröffentlichungstag der Anmeldung: 29.02.2012
(73) Patentinhaber: ThyssenKrupp Polysius AG, 59269 Beckum (DE)
(72) Erfinder: RÜTHER, Thomas, 48317 Drensteinfurt (DE); KLEGRAF, Tobias, 59602 Rüthen (DE); PETERS, Alexander, 59269 Beckum (DE)
(74) Vertreter: Tetzner, Michael
(86) Internationale Anmeldenummer: PCT/EP2010/053562
(87) Internationale Veröffentlichungsnummer: WO 2010/121870

(56) Entgegenhaltungen:
- DE-A1- 1 433 342
- DE-A1- 10 060 381

## Beschreibung

Die Erfindung betrifft eine Anlage zur Wärmebehandlung von stückigem Feststoff mit einer Vorwärmeinrichtung, einem Ofen sowie einer dazwischen angeordneten Trenn- oder Klassiereinrichtung, welche einen mit dem Ofen verbundenen Grobgutauslass und einen Feingutauslass aufweist.

Derartige Anlagen kommen beispielsweise zur Wärmebehandlung von Kalkstein zum Einsatz. Bei modernen Drehofenlagen z.B. zur Erzeugung von Stahlwerkskalk ist dem Ofen meist eine als Schachtvorwärmer ausgebildete Vorwärmeinrichtung vorgeschaltet, wie dies beispielsweise auch in der DD 245 243 A1 gezeigt ist. Dort besteht der Schachtvorwärmer aus mehreren voneinander getrennten Vorwärmerschächten, die über ein als Schubplattenförderer ausgebildetes, gemeinsames Transportorgan mit dem Ofen verbunden sind. Soll in einer solchen Anlage aus Kostengründen schwefelhaltiger Brennstoff eingesetzt werden, ist der maximal zulässige Schwefelgehalt im Brennstoff durch den maximal zulässigen Grenzwert für Schwefel im Kalk limitiert.

Je nach Brennbedingungen, konstruktiver Ausführung der Anlage und Steineigenschaften können unterschiedlich stark schwefelhaltige Brennstoffe eingesetzt werden. Zwischen dem Vorwärmer und Ofen bilden sich Kreisläufe aus. Hierbei handelt es sich um Staub- und Salzkreisläufe, beispielsweise Schwefelkreisläufe. Die kreislaufbildenden Bestandteile werden im Ofen bei einer bestimmten Temperatur teilweise verdampft und kondensieren im Vorwärmer aus. Da die Kondensation eine von der Partikeloberfläche abhängige Reaktion ist, nehmen kleine Partikel spezifisch eine größere Salzfracht auf als große. Sind die Konzentrationen bestimmter Bestandteile, wie z.B. Schwefel, im Kreislauf zu groß, kann es zwischen Ofen und Vorwärmer zu Anbackungen kommen, die den Betrieb der Anlage beeinträchtigen.

Der Einsatz von stark schwefelhaltigen Brennstoffen in konventionellen Vorwärmeranlagen ist daher aufgrund von unerwünschter Beeinflussung der Produktqualität und der Gefahr von Betriebsstörungen limitiert.

Aus der Praxis ist es bereits bekannt, zwischen Ofen und Kalkschachtvorwärmer einen Schwefelbypass vorzusehen, durch den Feingut aus dem Vorwärmprozess ausgeschleust werden kann. Dabei wird der Kreislauf entlastet und der Produktschwefel abgesenkt. Weil Sichtprozesse in diesem Zusammenhang unwirtschaftlich sind, wird das Material mechanisch klassiert. Um es der Siebmaschine aufgeben zu können, ist es aber notwendig, dass das Gut und die Vorwärmluft getrennt werden. In der DE 100 60381 A1 wird dies durch eine getrennte Material- und Gasleitung zwischen Vorwärmer und Drehrohrofen realisiert. Diese Bauweise bedingt jedoch eine große Höhe zwischen dem Vorwärmer und dem Ofen. Dadurch entstehen wiederum hohe Kosten im Baukörper. Da dieses Konzept eine bestimmte minimale Bauhöhe bedingt, ist es nicht möglich, bestehende Vorwärmer mit Schwefelbypass- Systemen auszurüsten.

Der Erfindung liegt daher die Aufgabe zugrunde, die Baukosten für eine Anlage zur Wärmebehandlung von stückigem Feststoff zu reduzieren. Eine weitere Aufgabe besteht darin, die Anlage zur Wärmebehandlung von stückigem Feststoff dahingehend weiterzuentwickeln, dass auch eine schon bestehende Vorwärmeinrichtung mit einem Schwefelbypass-System ausgerüstet werden kann.

Erfindungsgemäß werden diese Aufgaben mit den Merkmalen des Anspruches 1 gelöst.

Die erfindungsgemäße Anlage zur Wärmebehandlung von stückigem Feststoff umfasst im Wesentlichen eine Vorwärmeinrichtung, einen Ofen sowie eine dazwischen angeordnete Trenn- oder Klassiereinrichtung, welche einen mit dem Ofen verbundenen Grobgutauslass und einen Feingutauslass aufweist. Der Ofen und die Vorwärmeinrichtung sind über eine gegenüber der Vertikalen geneigt angeordnete Gas-Feststoffleitung miteinander verbunden, wobei am ofenseitigen Ende der Gas-Feststoffleitung die Ofenabgase eingeleitet werden und am vorwärmerseitigen Ende der vorgewärmte Feststoff aufgegeben wird. Die Trenn- oder Klassiereinrichtung ist an einer von der Gas-Feststoffleitung abzweigenden Bypassleitung angeschlossen, sodass zumindest eine Teilmenge des vorgewärmten Feststoffs mittels Schwerkraft über die Bypassleitung abgezweigt und der Trenn- oder Klassiereinrichtung zugeführt werden kann.

Durch die schräg angeordnete Gas-Feststoffleitung und die daran angeschlossene Trenn- oder Klassiereinrichtung wird die Bauhöhe gegenüber den bekannten Anlagen mit Schwefelbypass deutlich reduziert. Außerdem lässt sich der Schwefelbypass auch in bereits bestehenden Anlagen integrieren.

Weitere Ausgestaltungen der Erfindung sind Gegenstand der Unteransprüche.

Gemäß einer bevorzugten Ausgestaltung der Erfindung ist die Trenn- oder Klassiereinrichtung so ausgebildet, dass der Feststoff mittels Schwerkraft gefördert wird. Die Neigung der Gas-Feststoffleitung gegenüber der Vertikalen nimmt vorzugsweise einen Winkel im Bereich vom 25-65° ein.

Die Trenn- oder Klassiereinrichtung kann beispielsweise durch eine angetriebene Siebmaschine, insbesondere aber auch durch einen Rollenrost gebildet werden. Der Rollenrost ist dabei vorzugsweise geneigt angeordnet und kann zudem auch gekühlt werden.

Die Trenn- oder Klassiereinrichtung wird vorzugsweise unterhalb der Gas-Feststoffleitung angeordnet, sodass auch der Transport des Feststoffes zur Trenn- oder Klassiereinrichtung mittels Schwerkraft erfolgen kann. Durch diese Anordnung der Trenn- oder Klassiereinrichtung wird diese nicht unmittelbar den aus dem Ofen austretenden Heißgasen oder der Ofenstrahlung ausgesetzt.

In der Bypassleitung kann weiterhin ein Absperrorgan, insbesondere ein Nadelschieber, vorgesehen werden. Auf diese Weise kann die Trenn- oder Klassiereinrichtung zu Wartungs- oder Reparaturzwecken abgesperrt werden. Der vorgewärmte Feststoff rutscht dann über die schräg angeordnete Gas-Feststoffleitung direkt in den Ofen.

Gemäß einer besonderen Ausgestaltung der Erfindung weist die Vorwärmeinrichtung einer zentralen Austragstrichter auf, an den die geneigte Gas-Feststoffleitung so angeordnet werden kann, dass der vorgewärmte Feststoff entweder direkt in die Bypassleitung fällt oder über die Gas-Feststoffleitung hinein rutscht. Auf diese Weise kann bis zu 100% des stückigen Feststoffs über die Bypassleitung der Trenn- oder Klassiereinrichtung zugeführt werden. Beim Betreiben der oben beschriebenen Anlage wird der stückige Feststoff in der Vorwärmeinrichtung mit den heißen Abgasen des Ofens vorgewärmt und im Ofen gebrannt, wobei über die Bypassleitung wenigstens eine Teilmenge des vorgewärmten Feststoffs abgezweigt wird, die dann in der Trenn- oder Klassiereinrichtung in Grobgut und Feingut getrennt/klassiert wird, wobei das Grobgut dem Ofen zugeführt wird und das Feingut ausgeschleust wird. Das ausgeschleuste Feingut, das im Vergleich zum übrigen Kornband einen erhöhten Schwefelgehalt aufweist, wird dann einer geeigneten Weiterverarbeitung oder Entsorgung zugeführt.

Weitere Vorteile und Ausgestaltungen der Erfindung werden im Folgenden anhand der Beschreibung und der Zeichnung näher erläutert.

In der Zeichnung zeigen
- Fig. 1: eine schematische Schnittdarstellung der Anlage im Bereich zwischen Vorwärmer und Ofen,
- Fig.2: eine schematische Draufsicht in den Austragstrichter der Vorwärmeinrichtung.

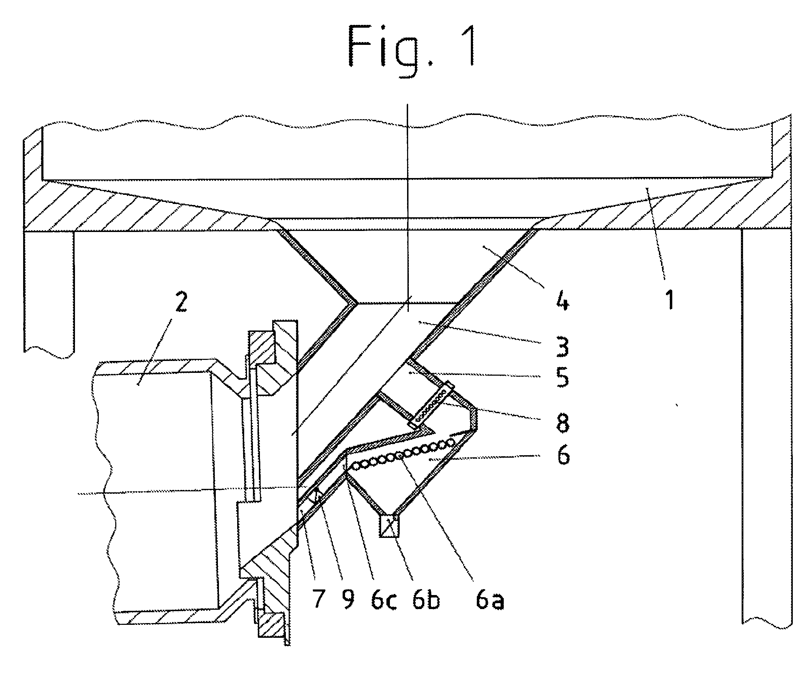

Die in Fig. 1 dargestellte Anlage zur Wärmebehandlung von stückigem Feststoff besteht im Wesentlichen aus einer Vorwärmeinrichtung 1 und einem als Drehrohrofen ausgebildeten Ofen 2, die über eine gegenüber der Vertikalen geneigt angeordnete Gas-Feststoffleitung 3 miteinander verbunden sind.

Die Vorwärmeinrichtung ist als Schachtvorwärmer ausgebildet, wobei der zu behandelnde Feststoff im oberen Bereich der Vorwärmeinrichtung 1 aufgegeben und im unteren Bereich über einen zentralen Austragstrichter 4 abgezogen wird. Die schräg angeordnete Gas-Feststoffleitung 3 ist am vorwärmerseitigen Ende an den Austragstrichter 4 angeschlossen und mündet am ofenseitigen Ende im Ofen 2. Die Abgase des Ofens 2 werden somit in die Gas-Feststoffleitung 3 eingeleitet und durchströmen in der Folge die Vorwärmeinrichtung 1 im Gegenstrom zum stückigen Feststoff.

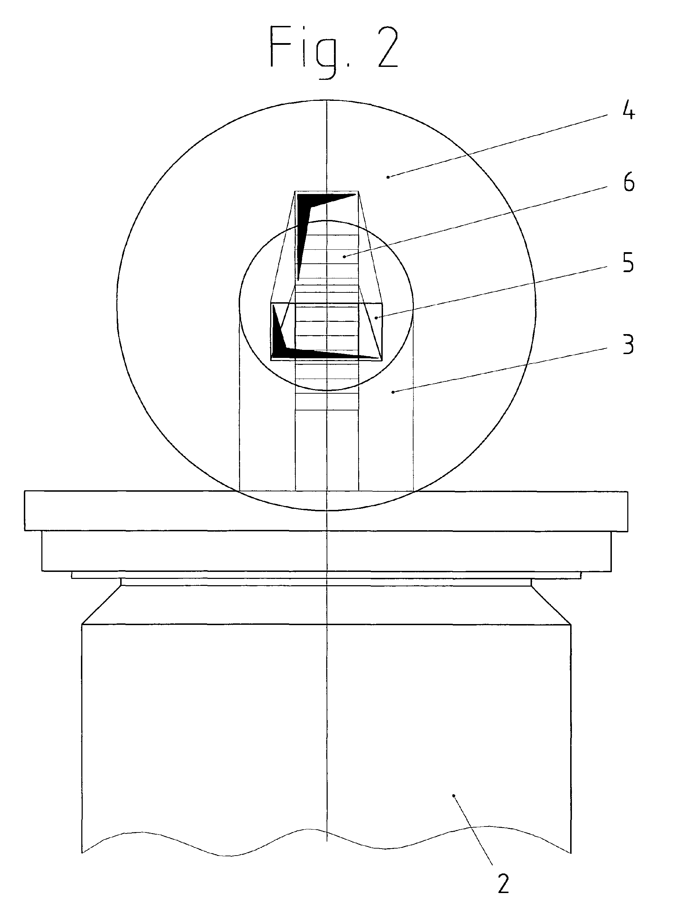

An der Unterseite der Gas-Feststoffleitung 3 zweigt weiterhin eine Bypassleitung 5 ab, die an eine Trenn- oder Klassiereinrichtung 6 angeschlossen ist. Aus der Draufsicht durch den Austragstrichter 4 gemäß Fig. 2 wird ersichtlich, dass der Austragstrichter 4 und die Bypassleitung 5 derart an die Gas-Feststoffleitung angeschlossen sind, dass der vorgewärmte Feststoff entweder direkt in die Bypassleitung 5 fällt oder über die Gas-Feststoffleitung 3 dorthinein rutscht. Auf diese Weise kann der gesamte vorgewärmte Feststoff über die Bypassleitung 5 zur Trenn- oder Klassiereinrichtung 6 abgezweigt werden.

Die Trenneinrichtung 6 weist im dargestellten Ausführungsbeispiel einen geneigten angeordneten Rollenrost 6a, einen Feingutauslass 6b und einen Grobgutauslass 6c auf. Der Grobgutauslass 6c ist über eine als Schwerkraftleitung ausgebildete Verbindungsleitung 7 mit den Ofen 2 verbunden. Der Rollenrost 6a kann dabei wahlweise angetrieben und/oder gekühlt ausgeführt sein.

Der aus über dem Austragstrichter 4 ausgetragene, vorgewärmte Feststoff fällt entweder direkt in die Bypassleitung 5 oder rutscht über die Gas-Feststoffleitung 3 in die Bypassleitung 5 und gelangt dort mittels Schwerkraft zum Rollenrost 6a. Der Feingutanteil des Feststoffs fällt durch den Rollenrost 6a und wird über den Feingutauslass 6b abgeführt. Hierbei handelt es sich um Feingut, das im Vergleich zum übrigen Kornband einen erhöhten Schwefelgehalt aufweist, das in geeigneter Weise weiterverarbeitet und/oder entsorgt wird. Der Grobgutanteil gelangt über den Grobgutauslass 6c und die Verbindungsleitung 7 mittels Schwerkraft in den Ofen 2, in dem das Gut fertig gebrannt wird.

In der Bypassleitung 5 ist weiterhin ein als Nadelschieber ausgebildetes Absperrorgan 8 angeordnet. Hierdurch kann die Trenn- oder Klassiereinrichtung 6, beispielsweise in einem Reparatur- oder Wartungsfall, abgesperrt werden. Der Teil der Bypassleitung 5 zwischen Gas-Feststoffleitung 3 und Absperrorgan 8 wird sich dann mit Festgut füllen, sodass in der Folge der weitere Feststoff über die Gas-Feststoffleitung 3 direkt in den Ofen 2 geleitet wird.

In der Verbindungsleitung 7 ist zur Reduzierung der Ofenabgase in der Trenn- oder Klassiereinrichtung 6 ein als Einfachpendelklappe ausgebildetes Luftabschlußorgan 9 angeordnet. Die gewichtsbelastete Einfachpendelklappe dichtet den Gasstrom durch das herabfließende Grobgut ab. Dadurch wird die Wärmebelastung der Trenn- oder Klassiereinrichtung herabgesetzt und das Gobgut kann durch Schwerkraft in den Ofen 2 gelangen.

Die Neigung der Gas-Feststoffleitung 3 und der Anschluss der Bypassleitung 5 auf deren Unterseite ermöglicht einen Transport des vorgewärmten Feststoffs mittels Schwerkraft. Durch die schräge Anordnung der Gas-Feststoffleitung kann die gesamte Bauhöhe der Anlage entsprechend reduziert werden. Man ist daher bestrebt, den Neigungswinkel so festzulegen, dass gerade noch ein Schwerkrafttransport des Feststoffs möglich ist. Die zweckmäßige Neigung der Gas-Feststoffleitung gegenüber der Vertikalen liegt in einem Winkelbereich von 25 - 65°. Als optimaler Winkel hat sich dabei der Schüttwinkel des zu behandelnden Feststoffs herausgestellt.

Der Anschluss der Bypassleitung 5 auf der Unterseite der Gas-Feststoffleitung 3 hat neben dem Schwerkrafttransport des Feststoffes auch den Vorteil, dass die aus dem Ofen 2 strömenden Ofenabgase vom Feststoff weitgehend getrennt ist.

## Patentansprüche

1. Anlage zur Wärmebehandlung vom stückigem Feststoff mit einer Vorwärmeinrichtung (1), einem Ofen (2) sowie einer dazwischen angeordneten Trenn- oder Klassiereinrichtung, welche einen mit dem Ofen verbundenen Grobgutauslass (6c) und einen Feingutauslass (6b) aufweist,
**dadurch gekennzeichnet, dass** der Ofen (2) und die Vorwärmeinrichtung (1) über eine gegenüber der Vertikalen geneigt angeordnete Gas-Feststoffleitung (3) miteinander verbunden sind, wobei am ofenseitigen Ende der Gas-Feststoffleitung (3) die Ofenabgase (2) eingeleitet werden und am vorwärmerseitigen Ende der vorgewärmte Feststoff aufgeben wird, und die Trenn- oder Klassiereinrichtung (6) an eine von der Gas-Feststoffleitung (3) abzweigenden Bypassleitung (5) angeschlossen ist, sodass zumindest eine Teilmenge des vorgewärmten Feststoffs mittels Schwerkraft über die Bypassleitung (5) abgezweigt und der Trenn- oder Klassiereinrichtung zugeführt wird.

2. Anlage nach Anspruch 1, wobei die Bypassleitung (5) und die Trenn- oder Klassiereinrichtung (6) so ausgebildet sind, dass der Feststoff mittels Schwerkraft gefördert wird.

3. Anlage nach einem oder mehreren der vorhergehenden Ansprüche, wobei die Neigung der Gas-Feststoffleitung (3) gegenüber der Vertikalen einen Winkel im Bereich von 25 bis 65° einnimmt.

4. Anlage nach einem oder mehreren der vorhergehenden Ansprüche, wobei die Trenn- oder Klassiereinrichtung (6) durch eine angetriebene Siebmaschine gebildet wird.

5. Anlage nach einem oder mehreren der vorhergehenden Ansprüche, wobei die Trenn- oder Klassiereinrichtung (6) weist einen Rollenrost (6a) auf.

6. Anlage nach Anspruch 5, wobei der Rollenrost (6a) gekühlt ist.

7. Anlage nach Anspruch 1, wobei in der Bypassleitung (5) ein Absperrorgan (8) angeordnet ist.

8. Anlage nach Anspruch 1, wobei die Trenn- oder Klassiereinrichtung (6) einen Grobgutauslass (6c) aufweist, der über eine Verbindungsleitung (7) mit dem Ofen verbunden ist, wobei in der Verbindungsleitung ein Luftabschlussorgan (9) angeordnet ist.

9. Anlage nach Anspruch 8, wobei das Luftabschlussorgan (9) durch eine Einfachpendelklappe gebildet wird.

10. Anlage nach einem oder mehreren der vorhergehenden Ansprüche, wobei die Vorwärmeinrichtung (1) einen zentralen Austragstrichter (4) aufweist, an den die geneigte Gas-Feststoffleitung (3) angeschlossen ist.

11. Anlage nach Anspruch 10, wobei der Austragstrichter (4) und die Bypassleitung (5) derart an die Gas-Feststoffleitung (3) angeschlossen sind, dass der vorgewärmte Feststoff entweder direkt in die Bypassleitung (5) fällt oder über die Gas-Feststoffleitung (3) hineinrutscht.

12. Anlage nach einem oder mehreren der vorhergehenden Ansprüche, wobei die Bypassleitung (5) derart an die Gas-Feststoffleitung (3) angeschlossen ist, dass wahlweise auch der gesamte vorgewärmte Feststoff über die Bypassleitung (3) abgezweigt werden kann.

13. Anlage nach einem oder mehreren der vorhergehenden Ansprüche, wobei die Vorwärmeinrichtung (1) als Schachtvorwärmer ausgebildet ist.

14. Anlage nach einem oder mehreren der vorhergehenden Ansprüche, wobei der Ofen (2) als Drehrohrofen ausgebildet ist.

15. Verfahren zum Betreiben einer Anlage gemäß einem oder mehreren der vorhergehenden Ansprüche, wobei der stückige Feststoff in der Vorwärmeinrichtung (1) mit den heißen Ofenabgasen (2) vorgewärmt und im Ofen gebrannt wird und wobei über die Bypassleitung (5) wenigstens eine Teilmenge des vorgewärmten Feststoffs abgezweigt wird, die dann in der Trenn- oder Klassiereinrichtung (6) in Grobgut und Feingut getrennt/klassiert wird, wobei das Grobgut dem Ofen (2) zugeführt wird und das Feingut ausgeschleust wird.

## Claims

1. System for thermally processing lumpy solid material having a preheating device (1), a furnace (2) and a separation or classification device which is arranged therebetween and which has a coarse material outlet (6c) connected to the furnace and a fine material outlet (6b),
**characterised in that**
the furnace (2) and the preheating device (1) are connected to each other by means of a gas/solid material line (3) which is arranged so as to be inclined relative to the vertical, the furnace exhaust gases (2) being introduced at the end of the gas/solid material line (3) at the furnace side and the preheated solid material being supplied at the end at the preheater side, and the separation or classification device (6) being connected to a bypass line (5) which branches off from the gas/solid material line (3) so that at least a partial amount of the preheated solid material is branched off via the bypass line (5) by means of gravitational force and is supplied to the separation or classification device.

2. System according to claim 1, wherein the bypass line (5) and the separation or classification device (6) are constructed in such a manner that the solid material is conveyed by means of gravitational force.

3. System according to one or more of the preceding claims, wherein the inclination of the gas/solid material line (3) relative to the vertical takes up an angle in the range from 25 to 65°.

4. System according to one or more of the preceding claims, wherein the separation or classification device (6) is formed by a driven sieving machine.

5. System according to one or more of the preceding claims, wherein the separation or classification device (6) has a roller table screen (6a).

6. System according to claim 5, wherein the roller table screen (6a) is cooled.

7. System according to claim 1, wherein a closure member (8) is arranged in the bypass line (5).

8. System according to claim 1, wherein the separation or classification device (6) has a coarse material outlet (6c) which is connected to the furnace via a connection line (7), an air closure member (9) being arranged in the connection line.

9. System according to claim 8, wherein the air closure member (9) is formed by a simple shuttle valve.

10. System according to one or more of the preceding claims, wherein the preheating device (1) has a central discharge funnel (4) to which the inclined gas/solid material line (3) is connected.

11. System according to claim 10, wherein the discharge funnel (4) and the bypass line (5) are connected to the gas/solid material line (3) in such a manner that the preheated solid material either falls directly into the bypass line (5) or slides in via the gas/solid material line (3).

12. System according to one or more of the preceding claims, wherein the bypass line (5) is connected to the gas/solid material line (3) in such a manner that the total preheated solid material can optionally also be branched off via the bypass line (3).

13. System according to one or more of the preceding claims, wherein the preheating device (1) is in the form of a shaft type preheater.

14. System according to one or more of the preceding claims, wherein the furnace (2) is in the form of a cylindrical rotary furnace.

15. Method for operating a system according to one or more of the preceding claims, the lumpy solid material being preheated in the preheating device (1) with the hot furnace exhaust gases (2) and being burnt in the furnace, and at least a partial amount of the preheated solid material being branched off by means of the bypass line (5) and then being separated/classified into coarse material and fine material in the separation or classification device (6), the coarse material being supplied to the furnace (2) and the fine material being discharged.

## Revendications

1. Installation pour le traitement thermique de matière solide en morceaux comprenant un dispositif de préchauffage (1), un four (2) et, agencé entre ceux-ci, un dispositif de séparation ou de classification, qui est doté d'une sortie de produit grossier (6c) et d'une sortie de produit fin (6b), **caractérisée en ce que** le four (2) et le dispositif de préchauffage (1) sont reliés ensemble par l'intermédiaire d'une conduite de gaz /matière solide (3), qui est inclinée par rapport à la verticale, sachant que les gaz d'échappement (2) du four sont introduits par l'extrémité de la conduite de gaz /matière solide (3), côté four, que la matière solide préchauffée est chargée par l'extrémité coté dispositif de préchauffage) et que le dispositif de séparation ou de classification (6) est raccordé à une conduite de dérivation (5) partant de la conduite de gaz / matière solide (3) de sorte qu'au moins une quantité partielle de la matière préchauffée est conduite, sous l'effet de la pesanteur, à travers la conduite de dérivation (5) et est amenée au dispositif de séparation ou de classification.

2. Installation selon la revendication 1, sachant que la conduite de dérivation (5) et le dispositif de séparation ou de classification (6) sont conçus de sorte que la matière solide se trouve convoyée sous l'effet de la pesanteur.

3. Installation selon l'une ou plusieurs des revendications précédentes, sachant que la pente de la conduite de gaz / matière solide (3) forme un angle de 25 à 65 ° par rapport à la verticale.

4. Installation selon l'une ou plusieurs des revendications précédentes, sachant que le dispositif de séparation ou de classification (6) est formé par un tamiseur entraîné.

5. Installation selon l'une ou plusieurs des revendications précédentes, sachant que le dispositif de séparation ou de classification (6) est doté d'une grille à rouleaux (6a).

6. Installation selon la revendication 5, sachant que la grille à rouleaux (6a) est refroidie.

7. Installation selon la revendication 1, sachant qu'un organe de fermeture (8) est associé à la conduite de dérivation (5)

8. Installation selon la revendication 1, sachant que le dispositif de séparation ou de classification (6) est doté d'une sortie de produit grossier (6c), qui est reliée au four par l'intermédiaire d'une conduite de raccordement (7), un organe d'obturation d'air (9) étant installé dans la conduite de raccordement.

9. Installation selon la revendication 8, sachant que l'organe d'obturation d'air (9) est formé par un simple clapet oscillant.

10. Installation selon l'une ou plusieurs des revendications précédentes, sachant que le dispositif de préchauffage (1) est doté d'une trémie de déversement centrale (4), à laquelle est raccordée la conduite de gaz / matière solide (3) inclinée.

11. Installation selon la revendication 10, sachant que la trémie de déversement (4) et la conduite de dérivation (5) sont raccordées à la conduite de gaz /matière solide (3) de sorte que la matière solide préchauffée glisse soit directement dans la conduite de dérivation (5), ou par l'intermédiaire de la conduite de gaz / matière solide (3).

12. Installation selon l'une ou plusieurs des revendications précédentes, sachant que la conduite de dérivation (5) est raccordée à la conduite de gaz /matière solide (3) de sorte que la totalité de la matière solide préchauffée puisse, au choix, être aussi dérivée par l'intermédiaire de la conduite de dérivation (5).

13. Installation selon l'une ou plusieurs des revendications précédentes, sachant que le dispositif de préchauffage (1) est réalisé sous la forme d'une cuve de préchauffage.

14. Installation selon l'une ou plusieurs des revendications précédentes, sachant que le four (2) est réalisé sous la forme d'un four tubulaire rotatif.

15. Procédé de fonctionnement d'une installation selon l'une ou plusieurs des revendications précédentes, sachant que la matière solide en morceaux est préchauffée dans le dispositif de préchauffage (1) avec les gaz d'échappement brûlants en provenance du four (2) et est calcinée dans le four, et sachant que, par l'intermédiaire de la conduite de dérivation (5), est dérivée au moins une partie de la matière solide préchauffée, qui est ensuite séparée / classifiée en produit grossier et produit fin, dans le dispositif de séparation ou de classification (6), sachant que le produit grossier est conduit dans le four (2) et que le produit fin est évacué.
